(19) Europäisches Patentamt / European Patent Office / Office européen des brevets

(11) **EP 3 880 622 B1**

(12) **FASCICULE DE BREVET EUROPEEN**

(45) Date de publication et mention de la délivrance du brevet:
**14.02.2024   Bulletin 2024/07**

(21) Numéro de dépôt: **19829279.9**

(22) Date de dépôt: **15.11.2019**

(51) Classification Internationale des Brevets (IPC):
***C03C 17/36*** (2006.01)

(52) Classification Coopérative des Brevets (CPC):
**C03C 17/36; C03C 17/3626; C03C 17/3639; C03C 17/3644; C03C 17/3649; C03C 17/3655; C03C 17/366; C03C 17/3681;** C03C 2217/78

(86) Numéro de dépôt international:
**PCT/FR2019/052716**

(87) Numéro de publication internationale:
**WO 2020/099799 (22.05.2020 Gazette 2020/21)**

(54) **MATERIAU TRAITE THERMIQUEMENT A PROPRIETES MECANIQUES AMELIOREES**

WÄRMEBEHANDELTES MATERIAL MIT VERBESSERTEN MECHANISCHEN EIGENSCHAFTEN

HEAT-TREATED MATERIAL WITH IMPROVED MECHANICAL PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **16.11.2018   FR 1860583**

(43) Date de publication de la demande:
**22.09.2021   Bulletin 2021/38**

(73) Titulaire: **Saint-Gobain Glass France
92400 Courbevoie (FR)**

(72) Inventeurs:
• **GUIMARD, Denis
75013 PARIS (FR)**
• **SKOLSKI, Johann
75018 PARIS (FR)**
• **HIVET, Romain
93400 SAINT-OUEN (FR)**
• **BELLEMIN, Joël
91210 DRAVEIL (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 0 792 847       EP-A1- 0 847 965
WO-A1-2007/042687    WO-A1-2007/042688
WO-A1-2015/071610    WO-A1-2018/160626**

**Description**

L'invention concerne un matériau comprenant un substrat transparent revêtu d'un empilement de couches minces comprenant au moins une couche métallique fonctionnelle à base d'argent. L'invention concerne également les vitrages comprenant ces matériaux ainsi que l'utilisation de tels matériaux pour fabriquer des vitrages d'isolation thermique et/ou de protection solaire.

Les couches métalliques fonctionnelles à base d'argent (ou couches d'argent) ont des propriétés de conduction électrique et de réflexion des rayonnements infrarouges (IR) avantageuses, d'où leur utilisation dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Ces couches d'argent sont déposées entre des revêtements à base de matériaux diélectriques comprenant généralement plusieurs couches diélectriques (ci-après « revêtements diélectriques ») permettant d'ajuster les propriétés optiques de l'empilement. Ces couches diélectriques permettent en outre de protéger la couche d'argent des agressions chimiques ou mécaniques.

Les propriétés optiques et électriques des matériaux dépendent directement de la qualité des couches d'argent telle que leur état cristallin, leur homogénéité ainsi que de leur environnement. On entend par « environnement », la nature des couches à proximité de la couche d'argent et la rugosité de surface des interfaces avec ces couches.

Pour améliorer la qualité des couches métalliques fonctionnelles à base d'argent, il est connu d'utiliser des revêtements diélectriques comprenant des couches diélectriques à fonction stabilisante destinées à favoriser le mouillage et la nucléation de la couche d'argent. Des couches diélectriques à base d'oxyde de zinc cristallisé sont notamment utilisées à cette fin. En effet, l'oxyde de zinc déposé par le procédé de pulvérisation cathodique cristallise sans nécessiter de traitement thermique additionnel. La couche à base d'oxyde de zinc peut donc servir de couche de croissance épitaxiale pour la couche d'argent.

Dans ce même objectif, il est également connu d'utiliser des couches de blocage situées entre une couche fonctionnelle et un revêtement diélectrique dont la fonction est de protéger ces couches fonctionnelles d'une éventuelle dégradation lors du dépôt du revêtement diélectrique supérieur et/ou lors d'un traitement thermique. De nombreuses possibilités variant notamment par la nature, le nombre et la position desdites couches de blocage ont été proposées.

Les demandes WO 2007/042687 et WO 2007/042688 divulguent par exemple des matériaux comprenant des sous couches de blocage à base de zinc métallique situées en dessous et au contact d'une couche fonctionnelle à base d'argent.

L'invention concerne tout particulièrement des empilements devant subir un traitement thermique à température élevée tel qu'un recuit, un bombage et/ou une trempe.

D'une manière générale, les traitements thermiques à température élevée sont susceptibles de rendre les empilements plus sensibles aux rayures. D'autre part, lorsque des rayures sont créées sur un matériau avant traitement thermique, leur visibilité augmente de manière considérable après traitement thermique.

Le demandeur a observé que des empilements comprenant, à proximité d'une couche d'argent, à la fois des couches de blocage choisies parmi certains matériaux et/ou de certaines épaisseurs et des couches diélectriques comprenant du zinc notamment à base d'oxyde de zinc ou à base d'oxyde de zinc et d'étain, présentent, suite au traitement thermique, avantageusement des propriétés de résistance aux rayures améliorées et désavantageusement une résistivité dégradée.

Ces phénomènes semblent en partie liés à des modifications au sein de la couche d'argent induites par la migration d'espèces lors du traitement thermique. Ces modifications impactent non seulement l'aspect visuel mais aussi les propriétés optiques et la conductivité électrique de l'empilement.

Les raisons et mécanismes de la migration d'espèces sont encore mal compris. Leur occurrence semble fortement tributaire de la nature des couches de blocage et des couches diélectriques constituant les revêtements diélectriques situés à proximité de la couche d'argent. La présence de certains matériaux diélectriques dans l'empilement, notamment de certains oxydes, ou de certaines couches de blocage, favorise la migration de certaines espèces, notamment le relargage d'éléments zinc métalliques à proximité de la couche d'argent, via la réduction des couches diélectriques comprenant du zinc.

L'amélioration de la résistance aux rayures pourrait être due au dopage de la couche d'argent par du zinc.

La dégradation de la résistivité pourrait être due à la présence d'éléments zinc métalliques ou à des défauts liés au zinc situés à l'interface supérieure ou inférieure de la couche d'argent et/ou aux joints de grain de la couche d'argent.

La présence d'éléments zinc métalliques dans la couche d'argent semble permettre d'améliorer la durabilité au détriment de la résistivité.

Fort de cette observation, le demandeur s'est intéressé aux effets de l'insertion volontaire d'une couche métallique à base de zinc dans des empilements fragiles du point de vue de la résistance aux rayures et destinés à subir un traitement thermique. L'objectif est d'obtenir, en ajoutant directement les éléments zinc métalliques, l'effet positif sur la résistance aux rayures. En procédant ainsi, l'amélioration ne dépend plus de la création d'espèces mobiles de zinc métallique par réduction de la couche comprenant du zinc.

Le demandeur a ainsi découvert que de manière surprenante la présence conjointe d'une couche métallique à base de zinc et d'une couche de blocage à proximité de la couche d'argent permet non seulement d'améliorer significativement la résistance aux rayures des empilements à l'argent, mais également de réduire drastiquement la corrosion à chaud et la corrosion à froid en milieux humide.

L'invention concerne donc un matériau selon la revendication 1.

La couche métallique à base de zinc se trouve dans un revêtement diélectrique au contact de ladite couche métallique fonctionnelle à base d'argent. Cela signifie que la couche métallique à base de zinc n'est pas séparée de ladite couche métallique fonctionnelle à base d'argent par une autre couche métallique fonctionnelle à base d'argent.

La présence d'une couche de zinc métallique à proximité de la couche d'argent provoque lors du traitement thermique la migration d'éléments zinc métalliques dans la couche d'argent suite au traitement thermique.

La présence d'une couche de blocage au contact de la couche d'argent semble permettre de ralentir la diffusion du zinc métallique à travers la couche d'argent et donc de maintenir plus longtemps les éléments zinc métalliques au contact de la couche d'argent, c'est à dire aux joints de grain ou aux interfaces.

La migration d'éléments zinc métalliques dans la couche d'argent suite au traitement thermique permet d'améliorer la résistance à la rayure après traitement thermique peu importe la structure de l'empilement. La couche métallique à base de zinc permet donc d'améliorer la résistance mécanique.

Une couche de blocage située au-dessus d'une couche métallique fonctionnelle à base d'argent est appelée surcouche de blocage. Une couche de blocage située en-dessous d'une couche métallique fonctionnelle à base d'argent est appelée sous-couche de blocage.

Une explication sur l'effet bénéfique lié à la présence d'une sur-couche de blocage ou d'une sous couche de blocage à proximité de la couche d'argent est la suivante.

Les couches d'argent sont des couches polycristallines, c'est à dire composées d'une pluralité de grains monocristallins d'argent. Lors du traitement thermique, un réarrangement s'opère conduisant à une diminution du nombre de grains et une augmentation de la taille des grains.

Il est possible que les espèces métalliques de zinc diffusent très efficacement dans l'empilement, c'est-à-dire à des températures inférieures aux températures auxquelles se produit ce réarrangement.

Prenons le cas où la couche métallique à base de zinc est située au-dessus de la couche d'argent. Si les éléments zinc métalliques diffusent à ces températures plus basses, en l'absence d'une sur-couche de blocage, ils pourraient facilement traverser la couche d'argent sans être retenus suffisamment. Dans ce cas, l'effet sur la modification de la mécanique et la résistivité serait moindre.

En revanche, lorsqu'une sur-couche de blocage est insérée entre les couches d'argent et de zinc, la couche de blocage pourrait faire barrière et freiner la diffusion des éléments zinc métalliques. Cela permettrait de conserver des éléments zinc métalliques dans la couche d'argent lorsque sont atteintes les températures plus élevées de réarrangement de la couche d'argent. Les éléments zinc métalliques seraient alors retenus à proximité de la couche d'argent. Cela expliquerait l'impact significatif de la présence de la couche de blocage sur les propriétés mécaniques et sur la résistivité.

Dans une moindre mesure, l'utilisation d'une sous-couche de blocage assure également la fonction de prévenir de la diffusion des éléments zinc métalliques et de les confiner à proximité de la couche d'argent. Des configurations selon ce mode de réalisation peuvent être avantageuses.

Dans ce type d'empilement, c'est à dire dans les empilements comprenant des sous-couches de blocage, la dégradation de la résistivité est moins élevée et l'absorption est en général moins critique. De plus, l'absorption peut plus aisément être modulée en jouant sur les épaisseurs des couches de blocage ou sur les épaisseurs des couches de zinc métallique.

Selon des modes de réalisation particulièrement avantageux, les empilements comprennent à proximité d'une couche d'argent, la combinaison d'une couche métallique à base de zinc et d'une sous-couche de blocage.

L'invention permet donc la mise au point d'un matériau comprenant un substrat revêtu d'un empilement comprenant au moins une couche fonctionnelle à base d'argent présentant, suite à un traitement thermique de type bombage, trempe ou recuit :

- une aptitude à être rayée plus faible et
- une résistance à la corrosion à chaud et à froid significativement améliorée.

Ces améliorations apportées à des empilements, sans autre optimisation, sont toutefois accompagnées d'une dégradation de la résistivité et de l'absorption.

La présente invention convient donc plus particulièrement pour des applications où :

- l'obtention d'une basse émissivité n'est pas critique et /ou

- une augmentation de l'absorption n'est également pas critique ou peut être compensée par d'autres moyens tels qu'une diminution de l'épaisseur des couches de blocage ou une diminution de l'absorption induite par des couches « plus » absorbantes situées à une position quelconque de l'empilement.

La solution de l'invention convient tout particulièrement dans le cas d'empilements à plusieurs couches fonctionnelles à base d'argent, notamment les empilements à deux ou trois couches fonctionnelles qui sont particulièrement fragiles du point de vue des rayures.

La présente invention convient également tout particulièrement dans le cas d'empilements à une seule couche fonctionnelle à base d'argent destinés à des applications où les empilements sont fortement sujets à la corrosion à froid en milieu humide. C'est notamment le cas de simple vitrage comprenant des empilements à une seule couche d'argent utilisés comme vitrage pour porte de réfrigérateur.

L'invention concerne également :

- un vitrage comprenant un matériau selon l'invention,
- un vitrage comprenant un matériau selon l'invention monté sur un véhicule ou sur un bâtiment, et
- le procédé de préparation d'un matériau ou d'un vitrage selon l'invention,
- l'utilisation d'un vitrage selon l'invention en tant que vitrage de contrôle solaire et/ou bas émissif pour le bâtiment ou les véhicules,
- un bâtiment, un véhicule ou un dispositif comprenant un vitrage selon l'invention.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Toutes les caractéristiques lumineuses décrites sont obtenues selon les principes et méthodes de la norme européenne EN 410 se rapportant à la détermination des caractéristiques lumineuses et solaires des vitrages utilisés dans le verre pour la construction.

Un vitrage pour le bâtiment délimite en général deux espaces, un espace qualifié d'« extérieur » et un espace qualifié d'« intérieur ». On considère que la lumière solaire entrant dans un bâtiment va de l'extérieur vers l'intérieur.

Selon l'invention, les caractéristiques lumineuses sont mesurées selon l'illuminant D65 à 2° perpendiculairement au matériau monté dans un double vitrage :

- TL correspond à la transmission lumineuse dans le visible en %,
- Rext correspond à la réflexion lumineuse extérieure dans le visible en %, observateur côté espace extérieur,
- Rint correspond à la réflexion lumineuse intérieure dans le visible en %, observateur coté espace intérieur,
- $a*T$ et $b*T$ correspondent aux couleurs en transmission $a*$ et $b*$ dans le système $L*a*b*$,
- $a*Rext$ et $b*Rext$ correspondent aux couleurs en réflexion $a*$ et $b*$ dans le système $L*a*b*$, observateur côté espace extérieur,
- $a*Rint$ et $b*Rint$ correspondent aux couleurs en réflexion $a*$ et $b*$ dans le système $L*a*b*$, observateur côté espace intérieur.

Les caractéristiques préférées qui figurent dans la suite de la description sont applicables aussi bien au matériau selon l'invention que, le cas échéant, au vitrage ou au procédé selon l'invention.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans les paragraphes suivants, les couches métalliques à base de zinc sont définies telles qu'elles sont obtenues lors du dépôt, c'est à dire avant traitement thermique. Dans la mesure où le traitement thermique induit la migration d'éléments zinc métallique dans l'empilement, il n'est pas possible de déterminer avec certitude, selon les épaisseurs déposées, comment est modifiée cette couche de zinc métallique suite au traitement thermique.

On entend par « couche métallique », une couche ne comprenant pas plus de 30 %, 20 % ou 10 % d'oxygène et/ou d'azote en pourcentage atomique dans la couche.

Les couches sont déposées sous forme métallique. Suite au dépôt et avant traitement thermique, elles ne devraient pas contenir plus de 10 % d'oxygène et/ou d'azote. Cependant, selon la nature de la couche déposée directement au-dessus, ces couches métalliques à base de zinc sont susceptibles de subir une oxydation partielle pouvant conduire à des proportions d'oxygène ou d'azote plus élevées. Ces proportions sont toutefois inférieures à 30 ou 20 %. En tout état de cause, au moins une partie en épaisseur de ces couches métalliques à base de zinc n'est pas oxydée ou nitrurée.

Les couches métalliques à base de zinc, (avant traitement thermique), comprennent, au moins 20 %, au moins 30 %, au moins 40 %, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de zinc par rapport à la masse de la couche métallique à base de zinc.

Les couches métalliques à base de zinc peuvent être choisies parmi :

- les couches métalliques de zinc,
- les couches métalliques de zinc dopées,
- les couches métalliques à base d'alliage de zinc.

Selon l'invention, on entend par « couche métallique de zinc », des couches métalliques de zinc pur pouvant tout de même comprendre quelques impuretés. Dans ce cas, la masse totale de zinc représente au moins 99 % en masse de la masse de la couche métallique à base de zinc.

Selon l'invention, les couches de zinc dopées comprennent au moins 90,0 %, au moins 95 %, au moins 96 %, au moins 97 %, au moins 98 % ou au moins 99 % en masse de zinc de la masse de la couche métallique à base de zinc.

Les couches de zinc dopées peuvent être choisies parmi les couches à base de zinc et d'au moins un élément choisi parmi le titane, le nickel, l'aluminium, l'étain, le niobium, le chrome, le magnésium, le cuivre, le silicium, l'argent ou l'or.

Selon l'invention, les couches à base d'alliage de zinc, comprennent au moins 20 %, au moins 30 %, au moins 40 %, au moins 50 %, au moins 60 %, au moins 70 %, au moins 80 % ou au moins 90 % en masse de zinc de la masse de la couche métallique à base de zinc.

Les couches à base d'alliage de zinc peuvent être choisies parmi les couches à base de zinc et d'au moins un élément choisi parmi le titane, le nickel, le chrome, l'étain. A titre d'exemple, on peut citer les alliages binaires de zinc et de titane tels que $Zn_2Ti$ ou les alliages ternaires à base de zinc, de nickel et de chrome tels que ZnNiCr.

L'épaisseur de la couche métallique à base de zinc est comprise de 0,2 à 10 nm.

L'épaisseur de la couche métallique à base de zinc, peut être :

- supérieure ou égale à 0,2 nm, supérieure ou égale à 0,5 nm, supérieure ou égale à 1,0 nm, supérieure ou égale à 1,2 nm ou supérieure ou égale à 1,5 nm, supérieure ou égale à 2 nm et/ou
- inférieure ou égale à 10 nm, inférieure ou égale à 8 nm, inférieure ou égale à 7 nm, inférieure ou égale à 6 nm, inférieure ou égale à 5 nm ou inférieure ou égale à 4 nm.

De préférence, la ou les couches métalliques à base de zinc sont situées au-dessus de la couche métallique fonctionnelle à base d'argent.

L'empilement peut comprendre au moins une surcouche de blocage, de préférence située immédiatement au contact de la couche métallique fonctionnelle à base d'argent.

L'empilement peut comprendre au moins une sous couche de blocage, de préférence située immédiatement au contact de la couche métallique fonctionnelle à base d'argent.

Les couches de blocage sont choisies parmi les couches métalliques à base de nickel comprenant au moins 20% en masse de nickel par rapport à la masse de la couche métallique de nickel,

Les couches de blocage peuvent être choisies parmi les couches métalliques notamment d'un alliage de nickel et de chrome (NiCr) ou de titane.

Les couches de blocage métallique à base de nickel peuvent comprendre, (avant traitement thermique), au moins 30 %, au moins 40 %, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de nickel par rapport à la masse de la couche métallique à base de nickel.

Les couches métalliques à base de nickel peuvent être choisies parmi :

- les couches métalliques de nickel,
- les couches métalliques de nickel dopées,
- les couches métalliques à base d'alliage de nickel.

Les couches métalliques à base d'alliage de nickel peuvent être à base d'alliage de nickel et de chrome.

Chaque couche de blocage présente une épaisseur comprise entre 0,1 et 5,0 nm. L'épaisseur de ces couches de blocage peut être :

- d'au moins 0,1 nm, d'au moins 0,2 nm, d'au moins 0,5 nm et/ou
- d'au plus 5,0 nm, d'au plus 4,0 nm, d'au plus 3,0 nm, d'au plus 2,0 nm.

Dans des modes de réalisation avantageux, l'empilement comprend également une ou plusieurs couches diélectriques cristallisées située à proximité de la couche d'argent. Ces couches diélectriques cristallisées sont en général des couches à base d'oxyde de zinc.

Il semble que les couches cristallisées n'empêchent pas la migration des éléments zinc métalliques. En revanche, du simple fait de leur épaisseur, la présence de telles couches freine cette migration. De préférence, couches métalliques à base de zinc sont séparées de la couche d'argent par des couches de blocage et/ou des couches cristallisées.

De préférence, la ou les couches métalliques à base de zinc sont situées au-dessus d'une couche d'argent et au-dessus d'une sur-couche de blocage. Dans cette configuration la couche métallique à base de zinc est située au-dessus de la couche métallique fonctionnelle à base d'argent et est séparée de cette couche par au moins une surcouche de blocage.

Cependant, d'autres configurations sont possibles.

La couche métallique à base de zinc peut être située :

- au-dessus d'une couche métallique fonctionnelle à base d'argent, la couche de zinc métallique est au contact de la couche métallique fonctionnelle à base d'argent (séquence Ag/Zn),
- au-dessus d'une couche métallique fonctionnelle à base d'argent, la couche de zinc métallique est séparée de la couche métallique fonctionnelle à base d'argent par au moins une surcouche de blocage (séquence Ag//Couche de blocage//Zn),
- au-dessus d'une couche métallique fonctionnelle à base d'argent et en dessous et au contact d'une couche diélectrique cristallisée, la couche de zinc métallique est au contact de la couche métallique fonctionnelle à base d'argent (séquence Ag/Zn/Couche cristallisée),
- au-dessus d'une couche métallique fonctionnelle à base d'argent et en dessous et au contact d'une couche diélectrique cristallisée, la couche de zinc métallique est séparée de la couche métallique fonctionnelle à base d'argent par au moins une surcouche de blocage (séquence Ag//Couche de blocage//Zn//Couche cristallisée),
- au-dessus d'une couche métallique fonctionnelle à base d'argent et au-dessus, et au contact d'une couche diélectrique cristallisée, la couche diélectrique cristallisée est éventuellement séparée de la couche métallique fonctionnelle à base d'argent par au moins une surcouche de blocage (séquence Ag//éventuellement Couche de blocage//Couche cristallisée/Zn),
- en-dessous d'une couche métallique fonctionnelle à base d'argent, la couche de zinc métallique est au contact de la couche métallique fonctionnelle à base d'argent (séquence Zn/Ag),
- en-dessous d'une couche métallique fonctionnelle à base d'argent, la couche de zinc métallique est séparée de la couche métallique fonctionnelle à base d'argent par au moins une sous couche de blocage (séquence Zn//Couche de blocage//Ag),
- en-dessous d'une couche métallique fonctionnelles à base d'argent et au-dessus et au contact d'une couche diélectrique cristallisée, la couche de zinc métallique est au contact de la couche métallique fonctionnelle à base d'argent (séquence Couche cristallisée/Zn/Ag),
- en-dessous d'une couche métallique fonctionnelles à base d'argent et au-dessus et au contact d'une couche diélectrique cristallisée, la couche de zinc métallique est séparée de la couche métallique fonctionnelle à base d'argent par au moins une sous couche de blocage (séquence Couche cristallisée/Zn//Couche de blocage//Ag),
- en-dessous d'une couche métallique fonctionnelle à base d'argent et en-dessous, et au contact d'une couche diélectrique cristallisée, la couche diélectrique cristallisée est au contact ou séparée de la couche métallique fonctionnelle à base d'argent par au moins une sous couche de blocage (séquence Zn/Couche cristallisée//éventuellement Couche de blocage//Ag).

L'épaisseur physique de toutes les couches séparant la couche métallique fonctionnelle à base d'argent de la couche métallique à base de zinc peut être comprise entre 0 et 15,0 nm, voire entre 0 et 10 nm, voire entre 0 et 5 nm, entre à 0,2 et 5 nm, entre 0,5 et 3 nm, entre 0,8 et 1,5 nm.

L'épaisseur de toutes les couches séparant la couche métallique fonctionnelle à base d'argent de la couche métallique à base de zinc peut être :

- supérieure ou égale à 0,2 nm, supérieure ou égale à 0,4 nm, supérieure ou égale à 0,5 nm, supérieure ou égale à 1 nm, supérieure ou égale à 2 nm, supérieure ou égale à 3 nm, supérieure ou égale à 4 nm, supérieure ou égale à 5 nm, supérieure ou égale à 6 nm, supérieure ou égale à 7 nm, supérieure ou égale à 8 nm ou supérieure ou égale à 9 nm et/ou
- inférieure ou égale à 20 nm, inférieure ou égale à 15 nm, inférieure ou égale à 13 nm, inférieure ou égale à 12 nm, inférieure ou égale à 11 nm, inférieure ou égale à 10 nm, inférieure ou égale à 9 nm ou inférieure ou égale à 8 nm, inférieure ou égale à 7 nm, inférieure ou égale à 6 nm, inférieure ou égale à 5 nm, inférieure ou égale à 4 nm, inférieure ou égale à 3 nm, inférieure ou égale à 2 nm, inférieure ou égale à 1,5 nm.

Toutes les configurations selon lesquelles la couche métallique à base de zinc est située au-dessus et non directement au-contact de la couche métallique fonctionnelle à base d'argent présentent, pour une épaisseur optimisée, une résistivité avant traitement thermique non dégradée par rapport à un empilement ne comprenant pas la couche métallique à base de zinc.

Selon l'invention, on entend par une résistivité non dégradée une variation de résistivité imputable à la présence de la couche de zinc non supérieure à 15%, de préférence non supérieure à 10 %.

La configuration selon laquelle la couche métallique à base de zinc est située au-dessus et séparée de la couche métallique fonctionnelle à base d'argent par une surcouche de blocage semble donner les meilleurs résultats.

La configuration selon laquelle la couche métallique à base de zinc est située au-dessus et séparée de la couche métallique fonctionnelle à base d'argent par une surcouche de blocage et une couche cristallisée donne également de bons résultats.

Il est également possible d'utiliser dans ces configurations une sous couche de blocage. L'utilisation de la sous-couche de blocage permet d'améliorer la résistance mécanique. On combine alors une sous-couche de blocage située en-dessous d'une couche d'argent et une couche métallique à base de zinc située au-dessus et directement au contact de ladite couche d'argent ou séparée de la couche d'argent par une couche cristallisée et/ou par une sur-couche de blocage.

Les configurations selon lesquelles la couche métallique à base de zinc est située en-dessous et à proximité de la couche métallique fonctionnelle à base d'argent, présentent une résistivité avant traitement thermique dégradée. Une possible explication est que la couche de zinc sous la couche d'argent augmente la rugosité de l'interface inférieure de la couche d'argent. Ceci est observé lorsque la couche métallique à base de zinc est située au contact d'une couche métallique fonctionnelle à base d'argent ou séparée de cette couche métallique fonctionnelle à base d'argent par au moins une sous-couche de blocage.

Selon l'invention, on entend par « couche située à proximité de », une couche située, par ordre de préférence croissant à moins de 15 nm, à moins de 10 nm, à moins de 5 nm, à moins de 4 nm, à moins de 3 nm, à moins de 2 nm d'une autre couche.

Les modes de réalisation suivants sont particulièrement avantageux car donnent les meilleurs résultats :

- la couche métallique à base de zinc est située à proximité de la couche d'argent et/ou
- la couche métallique à base de zinc est séparée de la couche d'argent par au moins une couche de blocage,
- la couche métallique à base de zinc est située au-dessus de la couche d'argent,
- l'empilement comprend une surcouche de blocage située immédiatement au contact de la couche métallique fonctionnelle à base d'argent.

Les couches métalliques à base de zinc, pour être efficaces, doivent permettre la diffusion d'éléments zinc métalliques vers la couche d'argent. Il est probable que si ces couches de zinc sont séparées de la couche d'argent :

- par une ou plusieurs couches diélectriques trop épaisses, par exemple des couches d'oxyde de zinc et d'étain trop épaisses et/ou
- par une ou plusieurs couches diélectriques à fonction barrière telles des couches de nitrures de silicium et/ou d'aluminium et/ou de zirconium,

la diffusion de ces éléments zinc métalliques sera fortement réduite voir empêchée. La couche métallique à base de zinc devient alors inefficace du point de vue de l'amélioration de propriétés mécaniques.

Selon l'invention, l'empilement comprend au moins une couche métallique fonctionnelle à base d'argent.

La couche métallique fonctionnelle à base d'argent, avant ou après traitement thermique, comprend au moins 95,0 %, de préférence au moins 96,5 % et mieux au moins 98,0 % en masse d'argent par rapport à la masse de la couche fonctionnelle.

De préférence, la couche métallique fonctionnelle à base d'argent avant traitement thermique comprend moins de 1,0 % en masse de métaux autres que de l'argent par rapport à la masse de la couche métallique fonctionnelle à base d'argent.

Après traitement thermique, la couche métallique fonctionnelle à base d'argent est susceptible de comprendre une proportion de zinc. Une mesure du dopage en zinc peut être réalisée par exemple par analyse microsonde de Castaing (ElectroProbe MicroAnalyzer ou EPMA en anglais) ou par mesure par sonde atomique tomographique (« Atom Probe Tomography »).

L'épaisseur de la couche fonctionnelle à base d'argent est comprise de 5 à 25 nm.

L'empilement de couches minces comprend au moins une couche fonctionnelle et au moins deux revêtements diélectriques comportant au moins une couche diélectrique, de manière à ce que chaque couche fonctionnelle soit disposée entre deux revêtements diélectriques.

L'empilement de couches minces peut comprendre au moins deux couches fonctionnelles métalliques à base d'argent et au moins trois revêtements diélectriques comportant au moins une couche diélectrique, de manière à ce que chaque couche fonctionnelle soit disposée entre deux revêtements diélectriques.

L'empilement de couches minces peut comprendre au moins trois couches fonctionnelles et au moins quatre revêtements diélectriques comportant au moins une couche diélectrique, de manière à ce que chaque couche fonctionnelle soit disposée entre deux revêtements diélectriques.

L'invention n'est pas limitée à l'insertion d'une seule couche métallique à base de zinc. Il est bien évidemment possible d'avoir une couche métallique à base de zinc à proximité d'au moins deux couches fonctionnelles à base d'argent, voire de chaque couche fonctionnelle à base d'argent.

Un empilement peut donc comprendre une ou plusieurs couches métalliques à base de zinc.

Un empilement comprenant au moins deux couches fonctionnelles métalliques à base d'argent peut comprendre au moins deux couches métalliques à base de zinc à proximité d'au moins deux couches fonctionnelles métalliques à base d'argent.

Il est également possible, dans des empilements à plusieurs couches fonctionnelles à base d'argent que chaque couche fonctionnelle métallique à base d'argent se trouve à proximité d'une couche fonctionnelle métallique à base de zinc.

L'empilement est situé sur au moins une des faces du substrat transparent.

Par « revêtement diélectrique » au sens de la présente invention, il faut comprendre qu'il peut y avoir une seule couche ou plusieurs couches de matériaux différents à l'intérieur du revêtement. Un « revêtement diélectrique » selon l'invention comprend majoritairement des couches diélectriques. Cependant, selon l'invention ces revêtements peuvent comprendre également des couches d'autre nature notamment des couches absorbantes par exemple métalliques.

On considère qu'un « même » revêtement diélectrique se situe :

- entre le substrat et la première couche fonctionnelle,
- entre chaque couche métallique fonctionnelle à base d'argent,
- au-dessus de la dernière couche fonctionnelle (la plus éloignée du substrat).

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

L'épaisseur d'un revêtement diélectrique correspond à la somme des épaisseurs des couches le constituant.

Les revêtements présentent une épaisseur supérieure à 15 nm, de préférence comprise entre 15 et 200 nm.

Les couches diélectriques des revêtements présentent les caractéristiques suivantes seules ou en combinaison :

- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 2 et 100 nm.

Les couches diélectriques peuvent être des couches qualifiées de couches cristallisées appelées également couche stabilisante ou de mouillage. On entend par couche stabilisante, une couche en un matériau apte à stabiliser l'interface avec la couche fonctionnelle. Ces couches sont en général à base d'oxyde de zinc.

Les couches à base d'oxyde de zinc, peuvent comprendre, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de zinc par rapport à la masse totale de tous les éléments constituant la couche à base d'oxyde de zinc à l'exclusion de l'oxygène et de l'azote.

Pour être correctement cristallisées par dépôt par pulvérisation cathodique, les couches à base d'oxyde de zinc comprennent avantageusement au moins 80 %, voire au moins 90 % en masse de zinc par rapport à la masse totale de tous les éléments constituant la couche à base d'oxyde de zinc à l'exclusion de l'oxygène et de l'azote.

Les couches à base d'oxyde de zinc peuvent comprendre un ou plusieurs éléments choisis parmi l'aluminium, le titane, le niobium, le zirconium, le magnésium, le cuivre, l'argent, l'or, le silicium, le molybdène, le nickel, le chrome, le platine, l'indium, l'étain et l'hafnium, de préférence l'aluminium.

Les couches à base d'oxyde de zinc peuvent être éventuellement dopée à l'aide d'au moins un autre élément, comme l'aluminium.

A priori, la couche à base d'oxyde de zinc n'est pas nitrurée, cependant des traces peuvent exister.

La couche à base d'oxyde de zinc comprend, par ordre de préférence croissant, au moins 80 %, au moins 90 %, au moins 95 %, au moins 98 %, au moins 100 %, en masse d'oxygène par rapport à la masse totale de l'oxygène et de l'azote.

De préférence, le revêtement diélectrique situé directement en-dessous de la couche métallique fonctionnelle à base d'argent comporte au moins une couche diélectrique cristallisée, notamment à base d'oxyde de zinc, éventuellement dopé à l'aide d'au moins un autre élément, comme l'aluminium.

Dans tous les empilements, le revêtement diélectrique le plus proche du substrat est appelé revêtement inférieur et le revêtement diélectrique le plus éloigné du substrat est appelé revêtement supérieur. Les empilements à plus d'une couche d'argent comprennent également des revêtements diélectriques intermédiaires situés entre le revêtement inférieur et supérieur.

De préférence, les revêtements inférieurs ou intermédiaires comprennent une couche diélectrique cristallisée à base d'oxyde de zinc située directement au contact de la couche métallique à base d'argent ou séparée par une sous couche de blocage.

De préférence, les revêtements intermédiaires ou supérieurs comprennent une couche diélectrique cristallisée à base d'oxyde de zinc située directement au contact de la couche métallique à base d'argent ou séparée par une surcouche de blocage.

Les couches d'oxyde de zinc ont une épaisseur :

- d'au moins 1,0 nm, d'au moins 2,0 nm, d'au moins 3,0 nm, d'au moins 4,0 nm, d'au moins 5,0 nm, et/ou
- d'au plus 25 nm, d'au plus 10 nm, d'au plus 8,0 nm.

Les couches diélectriques peuvent présenter une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. De telles couches diélectriques sont choisies parmi les couches :

- à base de composés de silicium et/ou d'aluminium et/ou de zirconium choisis parmi les oxydes tels que $SiO_2$, les nitrures tels que les nitrure de silicium $Si_3N_4$ et les nitrures d'aluminium AlN, et les oxynitrures $SiO_xN_y$, éventuellement dopé à l'aide d'au moins un autre élément,
- à base d'oxyde de zinc et d'étain,
- à base d'oxyde de titane.

De préférence, chaque revêtement comporte au moins une couche diélectrique constituée :

- d'un nitrure ou d'un oxynitrure d'aluminium et/ou de silicium et/ou de zirconium ou
- d'un oxyde mixte de zinc et d'étain, ou
- d'un oxyde de titane.

De préférence, chaque revêtement diélectrique comporte au moins une couche diélectrique à fonction barrière à base d'un nitrure d'aluminium et/ou de silicium et/ou de zirconium. De préférence, la somme des épaisseurs de toutes les couches diélectriques à fonction barrière à base d'un nitrure d'aluminium et/ou de silicium et/ou de zirconium dans chaque revêtement diélectrique est supérieure ou égale à 15 nm, voire supérieure ou égale à 20 nm.

Ces couches diélectriques ont, par ordre de préférence croissant, une épaisseur :

- inférieure ou égale à 40 nm, inférieure ou égale à 30 nm, inférieure ou égale à 25 nm, et/ou
- supérieure ou égale à 5 nm, supérieure ou égale à 10 nm ou supérieure ou égale à 15 nm.

L'empilement de couches minces peut éventuellement comprendre une couche de protection. La couche de protection est de préférence la dernière couche de l'empilement, c'est-à-dire la couche la plus éloignée du substrat revêtu de l'empilement (avant traitement thermique). Ces couches ont en général une épaisseur comprise entre 0,5 et 10 nm, de préférence 1 et 5 nm. Cette couche de protection peut être choisie parmi une couche de titane, de zirconium, d'hafnium, de silicium, de zinc et/ou d'étain, ce ou ces métaux étant sous forme métallique, oxydée ou nitrurée.

Selon un mode de réalisation, la couche de protection est à base d'oxyde de zirconium et/ou de titane, de préférence à base d'oxyde de zirconium, d'oxyde de titane ou d'oxyde de titane et de zirconium.

Le substrat revêtu de l'empilement ou l'empilement seulement est destiné à subir un traitement thermique. Cependant, la présente invention concerne également le substrat revêtu non traité thermiquement.

L'empilement peut ne pas avoir subi un traitement thermique à une température supérieure à 500 °C, de préférence 300 °C.

L'empilement peut avoir a subi un traitement thermique à une température supérieure à 300 °C, de préférence 500 °C.

Les traitements thermiques sont choisis parmi un recuit, par exemple par un recuit thermique rapide (« Rapid Thermal Process ») tel qu'un recuit laser ou lampe flash, une trempe et/ou un bombage. Le recuit thermique rapide est par exemple décrit dans la demande WO2008/096089.

La température de traitement thermique (au niveau de l'empilement) est supérieure à 300 °C, de préférence supérieure à 400 °C, et mieux supérieure à 500 °C.

Le substrat revêtu de l'empilement peut être est un verre bombé ou trempé.

Les substrats transparents selon l'invention sont en verre ou en matière organique polymérique.

Les substrats transparents organiques selon l'invention peuvent également être en polymère, rigides ou flexibles. Des exemples de polymères convenant selon l'invention comprennent, notamment :

- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluorés (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

L'invention concerne également un vitrage comprenant au moins un matériau selon l'invention. L'invention concerne un vitrage pouvant être sous forme de vitrage monolithique, feuilleté ou multiple, en particulier double vitrage ou triple vitrage.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend au moins un matériau selon l'invention et au moins un substrat additionnel, le matériau et le substrat additionnel sont séparés par au moins une lame de gaz intercalaire. Le vitrage réalise une séparation entre un espace extérieur et un espace intérieur.

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

Un vitrage feuilleté comporte au moins une structure de type premier substrat / feuille(s) / deuxième substrat.

La feuille polymérique peut notamment être à base de polyvinylbutyral PVB, éthylène vinylacétate EVA, polyéthylène téréphtalate PET, polychlorure de vinyle PVC. L'empilement de couches minces est positionné sur l'une au moins des faces d'un des substrats.

Ces vitrages peuvent être montés sur un bâtiment ou un véhicule.

Ces vitrages peuvent être montés sur des dispositifs tels que des portes de four ou de réfrigérateur.

Les exemples suivants illustrent l'invention.

**Exemples**

**I. Préparation des substrats : Empilements, conditions de dépôt**

Des empilements de couches minces définis ci-après sont déposés sur des substrats en verre sodo-calcique clair d'une épaisseur de 2 ou 4 mm.

Dans les exemples de l'invention :

- les couches fonctionnelles sont des couches d'argent (Ag),
- les couches de blocage sont des couches métalliques en alliage de nickel et de chrome (NiCr),
- les couches diélectriques sont à base de nitrure de silicium, dopé à l'aluminium ($Si_3N_4$ : Al) et d'oxyde de zinc (ZnO).

Les conditions de dépôt des couches, qui ont été déposées par pulvérisation (pulvérisation dite « cathodique magnétron »), sont résumées dans le tableau 1.

| Tableau 1 | Cible employée | Pression de dépôt | Gaz |
|---|---|---|---|
| Ag | Ag | 8.10-3 mbar | Ar à 100 % |
| Zn | Zn | 2.10-3 mbar | Ar à 100 % |
| NiCr | Ni:Cr à 80%:20% en poids | 2.10-3 mbar | Ar à 100 % |
| Si3N4 | Si:Al à 92%:8% en poids | 2.10-3 mbar | Ar /(Ar + N2) à 55 % |
| ZnO | Al :ZnO (5% Al en poids) | 2.10-3 mbar | Ar à 100 % |

Les tableaux ci-dessous listent les matériaux et les épaisseurs physiques en nanomètres (sauf autres indications) de chaque couche ou revêtement qui constitue les empilements en fonction de leurs positions vis-à-vis du substrat porteur de l'empilement.

| Matériaux | Couches | Réf. 1 | Réf. 2 | Emp. 1 | Emp.2 |
|---|---|---|---|---|---|
| Revêtement diélectrique | $Si_3N_4$<br>ZnO<br>Zn | 30<br>5<br>- | 30<br>5<br>- | 30<br>5<br>2-8 nm | 30<br>5<br>2 |
| Couche blocage OB | NiCr | 1 | 1 | 1 | 1 |
| Couche fonctionnelle | Ag | 10 | 10 | 10 | 10 |
| Couche blocage UB | NiCr | - | 1 | - | 1 |
| Revêtement diélectrique | ZnO<br>$Si_3N_4$ | 5<br>20 | 5<br>20 | 5<br>20 | 5<br>20 |
| Substrat (mm) | verre | | | | |

| Emp.1 | Emp.1-2 | Emp.1-4 | Emp.1-6 | Emp.1-8 |
|---|---|---|---|---|
| Epaisseur de Zn | 2 nm | 4 nm | 6 nm | 8 nm |

| Matériaux | Couches | Réf. 3 | Emp.3-1 | Emp.3-2 |
|---|---|---|---|---|
| Revêtement diélectrique | $Si_3N_4$ | 21 | 21 | 21 |
| | ZnO | 5 | 5 | 5 |
| | Zn | 0 | 0 | 2 |
| Couche blocage OB | NiCr | 1 | 1 | 1 |
| Couche fonctionnelle | Ag | 18 | 18 | 18 |
| Couche blocage UB | NiCr | 1 | 1 | 1 |
| Revêtement diélectrique | ZnO<br>$Si_3N_4$<br>ZnO<br>Zn | 5<br>77<br>5<br>0 | 5<br>77<br>5<br>2 | 5<br>77<br>5<br>0 |
| Couche blocage OB | NiCr | 1 | 1 | 1 |
| Couche fonctionnelle | Ag | 11 | 11 | 11 |
| Couche blocage UB | NiCr | 1 | 1 | 1 |
| Revêtement diélectrique | ZnO<br>$Si_3N_4$ | 5<br>36 | 5<br>36 | 5<br>36 |
| Substrat (mm) | verre | | | |

## II. Propriétés mécaniques

Des tests Erichsen à la Pointe (EST) dans les conditions suivantes ont été réalisés :

- EST : Ce test consiste à appliquer une pointe (pointe de Van Laar, bille d'acier) à une force donnée (en Newton) pour réaliser une rayure dans l'empilement et éventuellement de reporter la largeur des rayures. Le test EST (sans autre qualificatif) est réalisé sans traitement thermique.
- EST-TT : Ce test consiste à réaliser un test EST suivi d'un traitement thermique dans les conditions suivantes : Force appliquée : 0,3 N, 0,5 N, 0,8 N, 1N, 3 N ou 5 N; Traitement thermique, 10 minutes à une température de 650°C,
- TT-EST : Ce test consiste à réaliser un traitement thermique suivi d'un test EST dans les conditions suivantes : Traitement thermique, 10 minutes à une température de 650°C ; Force appliquée : 0,3 N, 0,5 N, 0,8 N, 1N, 3 N ou 5 N.

Le tableau ci-dessous reprend les résultats de mesure de la largeur des rayures en $\mu$m avec une force appliquée de 0,8 N.

| TT-EST 0,8 N | Réf.1 | Emp.1-2 | Emp.1-4 | Emp.1-6 | Emp.1-8 |
|---|---|---|---|---|---|
| largeur rayures ($\mu$m) | 18 | 13 | 11 | 16 | 21 |

Le test TT-EST montre que la profondeur des rayures décroit graduellement lorsque l'épaisseur de zinc augmente de 2 à 4 nm, avant de ré-augmenter lorsque l'épaisseur de zinc est comprise entre 6 et 8 nm

Le matériau comprenant 4 nm de zinc conduit à la résistance aux rayures la plus forte du point de vue de leur largeur et de leur visibilité. Ces résultats sont observés à la fois pour le test TT-EST et EST-TT.

L'amélioration apportée par le zinc sur la diminution de la largeur des rayures est significative entre 2 et 4 nm au vu des exemples. Dans des modes de réalisation alternatifs, une amélioration pourrait être observée pour des gammes d'épaisseur de zinc métallique plus faibles.

Les tests EST-TT et TT-EST ont également été réalisés sur la réf. 2 et l'empilement 2 qui diffèrent de la réf.1 et l'empilement 1-2 par la présence d'une sous-couche de blocage. Ces tests montrent des résultats similaires, c'est à dire que l'utilisation d'une couche métallique à base de zinc de 2 nm conduit à une amélioration significative des propriétés mécaniques se traduisant par une diminution de la largeur des rayures et de la visibilité des rayures.

### III. Observations microscopiques : Corrosion à chaud

a. Empilements à une seule couche fonctionnelle

La morphologie des couches est analysée par microscopie optique. Des images des rayures après test EST-TT (EST à 0,8 ou 3 N suivi d'un traitement thermique à 650°C) ont été réalisées.

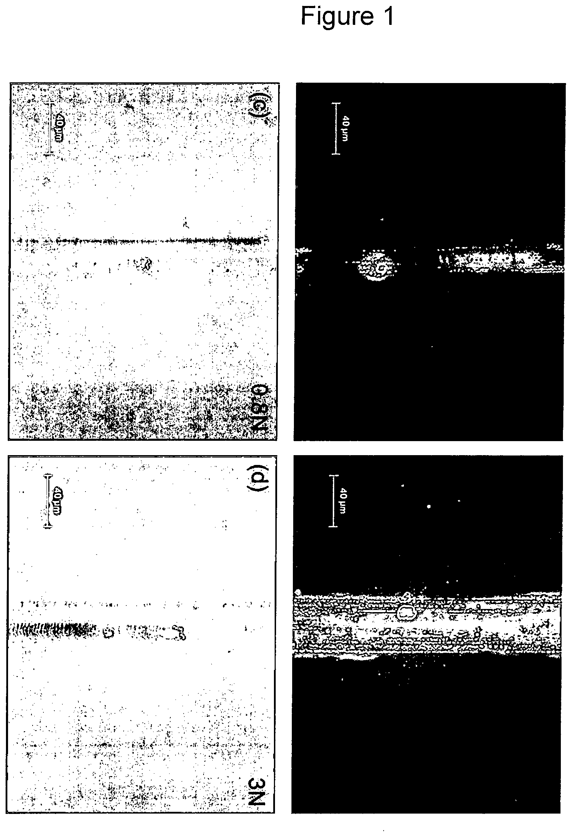

Les figures 1-a, 1-b, 1-c, 1-d sont des images prises au microscope de rayures faites après indentation avec une force de 0,8 ou 3 N suivie du traitement thermique.

|  | EST-TT 0,8 N | | EST-TT 3 N | |
|---|---|---|---|---|
|  | Image | Largeur | Image | Largeur |
| Réf.1 | 1-a | 25-35 | 1-b | 40-60 |
| Emp.1-2 | 1-c | 0-10 | 1-d | 0-15 |

Les rayures, lorsqu'elles sont présentes, sont beaucoup plus fines pour le matériau selon l'invention que pour le matériau de référence. Mais surtout, les rayures des matériaux selon l'invention comprenant une couche métallique à base de zinc ne sont pas du tout corrodées.

Ces observations montrent clairement que l'incorporation du zinc métallique assure deux fonctions. Cela améliore la résistance à la résistance aux rayures mais également drastiquement la résistance à la corrosion à chaud.

Enfin, les images après EST-TT suggèrent clairement qu'aucune rayure n'aurait été observée après un test EST à 0,8 et 3 N. Cela signifie que la présence de la couche de zinc métallique située au-dessus de la couche d'argent n'a pas altéré la résistance aux rayures avant traitement thermique.

b. Empilements à plusieurs couches fonctionnelles

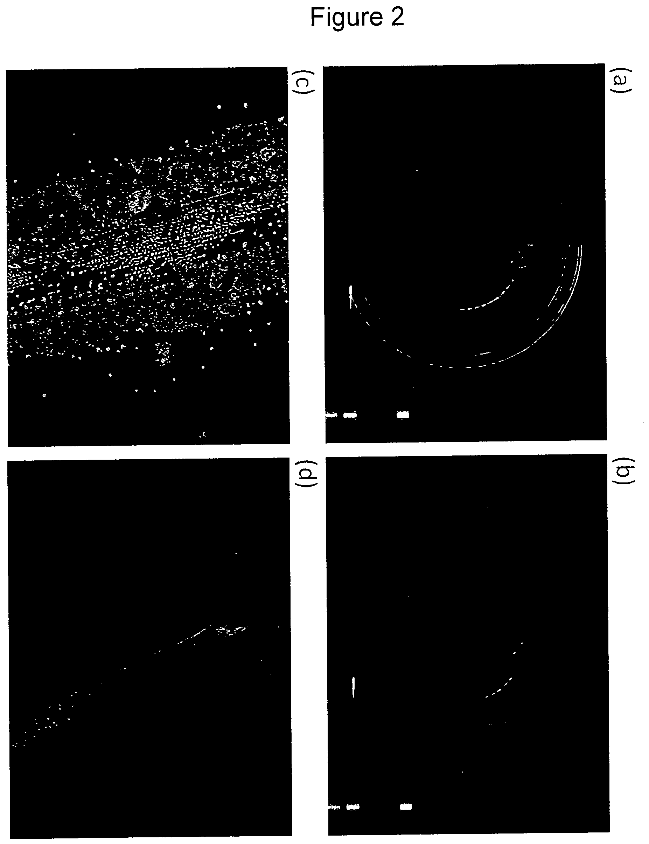

Les figures 2-a et 2-b sont des images optiques et les figures 2-c et 2-d sont des images prises au microscope de rayures faites après indentation avec une force de 3 N suivie du traitement thermique.

|  | EST-TT 3 N | |
|---|---|---|
|  | Images | Largeur |
| Réf.3 | 2-a et 2-c | 120-160 |
| Emp.3-1 | 2-b et 2-d | 0-30 |

Ces images montrent clairement la réduction drastique des rayures grâce à la solution de l'invention.

Les observations microscopiques montrent que les rayures faites avant traitement thermique deviennent fortement corrodées suite au traitement thermique pour l'exemple de référence Réf.3. Par comparaison, l'utilisation d'une métallique à base de zinc dans l'empilement 2-1 selon l'invention permet de supprimer presque entièrement toute corrosion à chaud (fig. 2-d).

Il est également constaté pour le matériau de l'invention que la largeur des rayures avant traitement thermique (EST) est plus faible que pour l'exemple de référence. Cela montre que la solution de l'invention permet également de réduire la résistance aux rayures avant traitement thermique

Les tests EST-TT ont été réalisés pour l' Emp.3-2. Les résultats sont similaires à ceux obtenus avec l'Emp.3-1.

Par conséquent, dans un empilement à plusieurs couches d'argent, on observe un effet positif de l'insertion d'une couche métallique à base de zinc lorsque cette couche est indifféremment positionnée à proximité de l'une seulement des couches d'argent.

Toutefois, l'invention n'est pas limitée à l'insertion d'une seule couche métallique à base de zinc. Il est bien évidemment possible d'avoir une couche métallique à base de zinc à proximité d'au moins deux couches fonctionnelles à base d'argent, voire de chaque couche fonctionnelle à base d'argent.

### IV. Observation microscopique : Corrosion à froid

Des tests haute humidité (Test HH) ont été réalisés. Ces tests consistent à placer les matériaux pendant 5 et 20 jours à 90% d'humidité et 50° C. Les matériaux testés sont la réf.1 et l'Emp.1-2.

Les tests ont étés réalisés sur des matériaux non traités thermiquement (BT) et sur des matériaux traités thermiquement (AT). Le tableau ci-dessus indique si des points de corrosion (Pts corr.) sont observés. Les appréciations suivantes sont données :

- « 0 » : pas de points de corrosion,
- « + » : quelques points de corrosion,
- « ++ » : points de corrosion visibles,
- « +++ » : Beaucoup de points de corrosion.

La figure 3 comprend des images optiques montrant la visibilité de la corrosion après 5 et 20 jours de test HH sur des matériaux non traités thermiquement (3-a, 3-b, 3-d , 3-e) et traité thermiquement (3-c et 3-f).

La figure 4 comprend des images prises au microscope montrant les défauts dus à la corrosion après 5 jours de test HH avant traitement thermique (4-a) et après traitement thermique (4-b).

| Test HH | 5 jours BT | | 20 jours BT | | 20 jours AT | |
|---|---|---|---|---|---|---|
| | Image | Pts corr. | Image | Pts corr. | Image | Pts corr. |
| **Réf.1 BT** | 3-a, 4-a | + | 3-b | ++ | 3-c | +++ |
| **Emp.1-2 BT** | 3-d | 0 | 3-e | 0 | 3-f | + |
| BT : Avant traitement thermique, AT : Après traitement thermique ; pts : Points, « - » : pas d'image. | | | | | | |

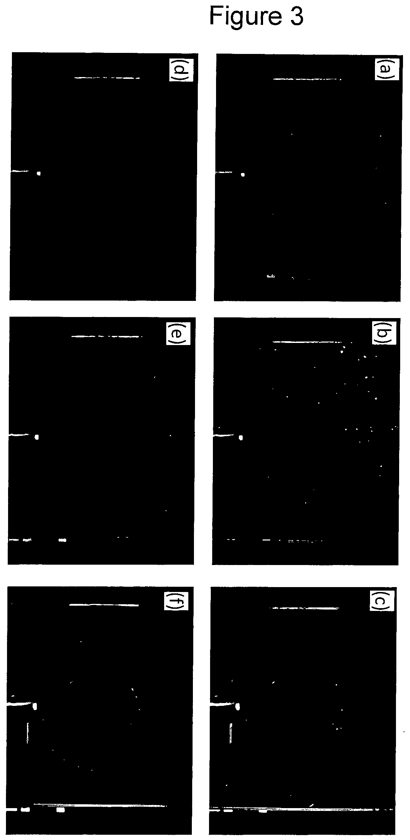

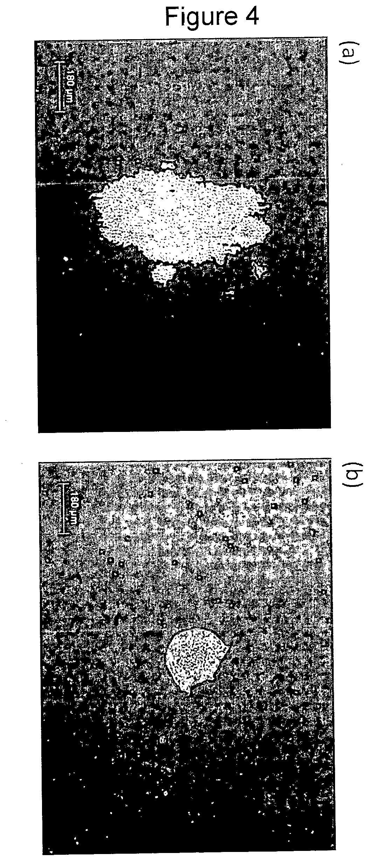

L'empilement de référence sans traitement thermique présente des défauts de corrosion visibles à l'œil après 5 jours de test HH (Fig. 3a et 4-a). La densité des points de corrosion augmente après 20 jours de test HH (Fig. 3-b).

Pour les matériaux selon l'invention sans traitement thermique, la présence d'une couche métallique à base de zinc prévient la formation de points de corrosion (Fig. 3-d et 3-e). On n'observe pas de points de corrosion après 5 jours et uniquement quelques points après 20 jours.

L'incorporation d'une couche métallique à base de zinc augmente de manière significative la résistance à la corrosion à froid.

L'empilement de référence traité thermiquement devient complètement flou après 20 jours (Fig. 3-c). La caractérisation au microscope optique après 5 jours (Fig. 4-b) montre une densité très élevée de défauts micrométriques en plus des larges défauts de corrosion déjà observés pour le matériau non traité thermiquement (Fig. 4-a).

Pour les matériaux selon l'invention traités thermiquement, la présence d'une couche métallique à base de zinc prévient la formation de flou lié à la corrosion à froid (Fig. 3-f).

Selon l'invention, on observe grâce à l'incorporation d'une couche métallique à base de zinc une amélioration significative de la résistance à la corrosion à froid aussi bien sur les matériaux traités thermiquement que non traités thermiquement.

**V. Evaluation de la dégradation de la résistivité et de l'absorption**

**1. Influence de l'épaisseur de la couche de zinc et de la température du traitement thermique**

La résistance carré Rsq, correspondant à la résistance rapportée à la surface, est mesurée par induction avec un Nagy SMR-12. La résistance carrée a été mesurée avant traitement thermique (BT) et après des traitements thermiques à températures allant de 300 et 650°C pendant 10 min (AT).

Le tableau ci-dessous reprend les résultats de résistance carré (valeurs données en Ohm/□) et d'absorption (abs.) obtenus pour des substrats revêtus, avant et après trempe, en fonction de l'épaisseur de la couche métallique à base de zinc.

| Emp. | Réf.1 | Emp.1-2 | Emp.1-4 | Emp.1-6 | Emp.1-8 |
|---|---|---|---|---|---|
| **Rsq avant TT** | 5,9 | 6,5 | 8,9 | 10,2 | 11,7 |
| **Rsq après TT 300° C** | 5,5 | 7,3 | 11,9 | 14,2 | 15,3 |
| **Rsq après TT 650° C** | 4,4 | 6,9 | 10,0 | 11,4 | 12,5 |
| **Abs. après TT 650° C** | 10% | 14% | 22% | 28% | 34% |

On constate que l'Emp. 1-2, comprenant une épaisseur de couche de zinc métallique de 2 nm, présente une résistivité non dégradée, c'est à dire une variation de résistivité imputable à la présence de la couche de zinc inférieure à 9 %.

L'empilement de référence (sans couche de zinc métallique) présente une diminution de sa résistivité suite au traitement thermique proportionnelle à la température du traitement thermique. Ce gain en résistivité est égal à environ 10 et 30%, respectivement à 300 et 650°C.

Lorsque l'on ajoute une couche métallique à base de zinc, le gain en résistivité suite au traitement thermique décroit graduellement avec des épaisseurs croissantes de zinc.

La résistivité est dégradée dès 300°C par rapport à l'exemple de référence. A 650°C, la résistivité est dégradée mais de manière moins importante qu'à 300°C.

L'absorption augmente graduellement avec l'épaisseur de zinc (Emp.1-2 à 1-8 et Réf.1).

**2. Influence de la présence d'une couche de sous blocage**

La résistance carrée et l'absorption ont été mesurées avant traitement thermique (BHT) et après des traitements thermiques à une température de 650°C pendant 10 min (AHT).

a. Empilements à une seule couche fonctionnelle

La variation de résistivité est déterminée de la façon suivante :

$$\Delta Rsq_{(AT\ vs.\ BT)} = (Rsq_{AT} - Rsq_{BT})/Rsq_{BT} \times 100.$$

| Matériau | Rsq ($\Omega/\square$) | | $\Delta$Rsq (%) (AT vs. BT) | Abs (%) | |
|---|---|---|---|---|---|
| | BT | AT | | BT | AT |
| Réf. 1 | 6,3 | 4,4 | +30 | 11 | 7 |
| Emp.1-2 | 6,9 | 7,6 | -10 | 19 | 12 |
| Réf. 2 | 7,3 | 4,6 | +37 | 14 | 9 |
| Emp.2 | 8,1 | 7,8 | +4 | 22 | 16 |
| BT : Avant traitement thermique, AT : après traitement thermique. | | | | | |

Lorsque l'empilement ne comprend pas de couche de sous-blocage et comprend une couche de zinc (Emp.1-2), la résistance par carré est dégradée après traitement thermique alors que l'empilement de référence 1 sans couche de zinc montre un gain de 31 % après traitement thermique.

L'exemple Réf. 2 comprenant une sous couche de blocage et ne comprenant pas de couche de zinc présente un gain de 37 %.

Lorsque l'empilement comprend une couche de sous-blocage et comprend une couche de zinc (Emp. 2), un gain de résistivité de 4 % est observé. La résistivité est donc significativement moins dégradée lors du traitement thermique lorsque l'empilement comprend une sous couche de blocage. En présence d'une sous couche de blocage, l'impact de l'incorporation d'une couche métallique à base de zinc est donc moins sévère sur la résistivité après traitement thermique.

Cette tendance suggère que des espèces zinc métallique diffusent partiellement lors du traitement thermique au niveau de l'interface inférieure de la couche d'argent et dégrade la résistivité. Étant donné que cette interface inférieure est déjà dégradée en raison de la présence de la sous couche de blocage, la diffusion des espèces zinc métalliques nuit à la résistivité mais dans une plus faible mesure que dans le cas où il n'y a pas de sous couche de blocage.

b. Empilements à plusieurs couches fonctionnelles

| Matériaux | Rsq (Ω/□) | | $\Delta Rsq_{(AT \text{ vs. } BT)}$ (%) | Abs (%) | |
|---|---|---|---|---|---|
| | BT | AT | | BT | AT |
| Réf. 3 | 1,95 | 1,44 | 26 | 30 | 19 |
| Emp.3-1 | 1,98 | 1,56 | 21 | 35 | 24 |
| Emp.3-2 | 1,98 | 1,74 | 12 | 35 | 24 |

L'empilement de référence (Réf.3) présente un gain de résistivité conventionnel après traitement thermique de 26 %. Les empilements selon l'invention comprenant une couche de zinc présentent un gain de résistivité après traitement thermique respectivement de 21 et 12 %.

La plus grande dégradation de la résistivité observée pour l'empilement Emp.3-2 s'explique par le fait que l'épaisseur d'Ag-2 (18 nm) est supérieure à celle d'Ag-1 (11 nm). Cependant, on peut noter que globalement, la résistivité est significativement moins dégradée que ce qui est généralement observé pour les empilements ne comprenant pas de sous couche de blocage.

La raison de la plus faible dégradation de résistivité induite par l'incorporation d'une couche métallique à base de zinc est attribuable à la présence de la sous couche de blocage, comme expliqué ci-dessus.

On observe une augmentation de l'absorption de 19 % à 24 % lorsque l'on ajoute une couche de zinc.

## VI. Conclusion

Les exemples selon la présente invention montrent que l'insertion d'une couche métallique à base de zinc améliore drastiquement les propriétés mécaniques avec notamment une réduction de la visibilité des rayures avant et après traitement thermique (résultat tests EST, EST-TT et TT-EST). L'incorporation de la couche métallique à base de zinc conduit également à une forte diminution de la corrosion à chaud, voir à sa suppression comme le prouve les résultats au test EST-TT.

La solution de l'invention permet donc :

- d'obtenir une excellente résistance aux rayures,
- d'améliorer significativement la résistance à la corrosion à chaud,
- d'améliorer significativement la résistance à la corrosion à froid.

En revanche, l'utilisation d'une telle couche impacte la résistivité et l'absorption. L'utilisation d'une sous couche de blocage permet de réduire la dégradation de la résistivité.

## Revendications

1.  Matériau comprenant un substrat transparent en verre ou en matière organique polymérique revêtu d'un empilement de couches minces comprenant au moins une couche métallique fonctionnelle à base d'argent et au moins deux revêtements diélectriques, chaque revêtement diélectrique comportant au moins une couche diélectrique, de manière à ce que chaque couche métallique fonctionnelle soit disposée entre deux revêtements diélectriques, **caractérisé en ce que** l'empilement comprend :

    - au moins une couche de blocage, notamment une surcouche et/ou une sous couche de blocage, située immédiatement au contact d'une couche métallique fonctionnelle à base d'argent, choisies parmi les couches métalliques à base de nickel comprenant au moins 20 % en masse de nickel par rapport à la masse de la couche métallique à base de nickel,
    - au moins une couche métallique à base de zinc, située au-dessus ou en dessous de cette couche métallique fonctionnelle à base d'argent, directement au contact ou séparée par une ou plusieurs couches dont l'épaisseur totale est inférieure ou égale à 20 nm.

2.  Matériau selon la revendication 1, **caractérisé en ce que** la ou les couches de blocage présentent une épaisseur comprise entre 0,1 et 5,0 nm.

3.  Matériau selon l'une quelconque des revendications précédentes, **caractérisé en ce que** la couche métallique à base de zinc est séparée de la couche métallique fonctionnelle à base d'argent par au moins une couche de blocage.

4.  Matériau selon l'une quelconque des revendications précédentes, **caractérisé en ce que** l'épaisseur de toutes les couches séparant la couche métallique fonctionnelle à base d'argent de la couche métallique à base de zinc est inférieure ou égale à 10 nm.

5.  Matériau selon l'une quelconque des revendications précédentes, **caractérisé en ce que** la couche métallique à base de zinc est située au-dessus de la couche métallique fonctionnelle à base d'argent.

6.  Matériau selon l'une quelconque des revendications précédentes, **caractérisé en ce que** l'empilement comprend une surcouche de blocage située immédiatement au contact de la couche métallique fonctionnelle à base d'argent.

7.  Matériau selon l'une quelconque des revendications précédentes, **caractérisé en ce que** l'épaisseur de la couche métallique à base de zinc est comprise de 0,2 à 10 nm.

8.  Matériau selon l'une quelconque des revendications précédentes, **caractérisé en ce que** les couches métalliques à base de zinc comprennent au moins 20 % en masse de zinc par rapport à la masse de la couche métallique à base de zinc.

9.  Matériau selon l'une quelconque des revendications précédentes, **caractérisé en ce que** le revêtement diélectrique situé directement en-dessous de la couche métallique fonctionnelle à base d'argent comporte au moins une couche diélectrique cristallisée, notamment à base d'oxyde de zinc, éventuellement dopé à l'aide d'au moins un autre élément, comme l'aluminium.

10. Matériau selon l'une quelconque des revendications précédentes, **caractérisé en ce que** chaque revêtement diélectrique comporte au moins une couche diélectrique à fonction barrière à base d'un nitrure d'aluminium et/ou de silicium et/ou de zirconium.

11. Matériau selon l'une quelconque des revendications 1 à 10 **caractérisé en ce que** l'empilement n'a pas subi un traitement thermique à une température supérieure à 500 °C, de préférence 300 °C.

12. Matériau selon l'une quelconque des revendications précédentes **caractérisé en ce que** l'empilement a subi un traitement thermique à une température supérieure à 300 °C, de préférence 500 °C.

13. Matériau selon l'une quelconque des revendications précédentes, **caractérisé en ce que** le substrat est en verre silico-sodo-calcique.

14. Vitrage comprenant un matériau selon l'une quelconque des revendications 1 à 13 **caractérisé en ce qu'**il est sous forme de vitrage monolithique, feuilleté ou multiple, en particulier double vitrage ou triple vitrage.

**Patentansprüche**

1.  Material, umfassend ein transparentes Substrat aus Glas oder aus einem polymeren organischen Stoff, das mit einer Stapelung dünner Schichten beschichtet ist, umfassend mindestens eine metallische Funktionsschicht auf Silberbasis und mindestens zwei dielektrische Beschichtungen, wobei jede dielektrische Beschichtung mindestens eine dielektrische Schicht aufweist, sodass jede metallische Funktionsschicht zwischen zwei dielektrischen Beschichtungen angeordnet ist, **dadurch gekennzeichnet, dass** die Stapelung umfasst:

    - mindestens eine Sperrschicht, insbesondere eine Sperrdeckschicht und/oder -unterschicht, die sich unmittelbar in Kontakt mit einer funktionellen Metallschicht auf Silberbasis befindet, ausgewählt aus Metallschichten auf Nickelbasis, die zu mindestens 20 Gew.-% Nickel bezogen auf das Gewicht der Metallschicht auf Nickelbasis umfassen,
    - mindestens eine Metallschicht auf Zinkbasis, die sich über oder unter dieser funktionellen Metallschicht auf Silberbasis befindet, die direkt in Kontakt steht oder durch eine oder mehrere Schichten getrennt ist, deren Gesamtdicke kleiner als oder gleich 20 nm ist.

2.  Material nach Anspruch 1, **dadurch gekennzeichnet, dass** die eine oder die mehreren Sperrschichten eine Dicke zwischen 0,1 und 5,0 nm vorweisen.

3. Material nach einem der vorstehenden Ansprüche,
**dadurch gekennzeichnet, dass** die Metallschicht auf Zinkbasis von der funktionellen Metallschicht auf Silberbasis durch mindestens eine Sperrschicht getrennt ist.

4. Material nach einem der vorstehenden Ansprüche,
**dadurch gekennzeichnet, dass** die Dicke aller Schichten, die die funktionelle Metallschicht auf Silberbasis von der Metallschicht auf Zinkbasis trennen, kleiner als oder gleich 10 nm ist.

5. Material nach einem der vorstehenden Ansprüche,
**dadurch gekennzeichnet, dass** die Metallschicht auf Zinkbasis sich über der funktionellen Metallschicht auf Silberbasis befindet.

6. Material nach einem der vorstehenden Ansprüche,
**dadurch gekennzeichnet, dass** die Stapelung eine Sperrdeckschicht umfasst, die sich unmittelbar in Kontakt mit der metallischen Funktionsschicht auf Silberbasis befindet.

7. Material nach einem der vorstehenden Ansprüche,
**dadurch gekennzeichnet, dass** die Dicke einer metallischen Funktionsschicht auf Zinkbasis von 0,2 bis 10 nm beträgt.

8. Material nach einem der vorstehenden Ansprüche,
**dadurch gekennzeichnet, dass** die Metallschichten auf Zinkbasis mindestens zu 20 Gew.-% Zink bezogen auf das Gewicht der Metallschicht auf Zinkbasis umfassen.

9. Material nach einem der vorstehenden Ansprüche,
**dadurch gekennzeichnet, dass** die dielektrische Beschichtung, die sich direkt unterhalb der metallischen Funktionsschicht auf Silberbasis befindet, mindestens eine kristallisierte dielektrische Schicht, insbesondere auf Zinkoxidbasis, gegebenenfalls mithilfe mindestens eines anderen Elements, wie Aluminium, dotiert, aufweist.

10. Material nach einem der vorstehenden Ansprüche,
**dadurch gekennzeichnet, dass** jede dielektrische Beschichtung mindestens eine dielektrische Schicht mit Barrierefunktion auf Aluminium- und/oder Silizium- und/oder Zirkoniumnitridbasis aufweist.

11. Material nach einem der Ansprüche 1 bis 10,
**dadurch gekennzeichnet, dass** die Stapelung keine Wärmebehandlung bei einer Temperatur über 500 °C, vorzugsweise 300 °C, erfahren hat.

12. Material nach einem der vorstehenden Ansprüche,
**dadurch gekennzeichnet, dass** die Stapelung eine Wärmebehandlung bei einer Temperatur über 300 °C, vorzugsweise 500 °C, erfahren hat.

13. Material nach einem der vorstehenden Ansprüche,
**dadurch gekennzeichnet, dass** das Substrat aus Kalk-Natron-Silikatglas besteht.

14. Verglasung, umfassend ein Material nach einem der Ansprüche 1 bis 13, **dadurch gekennzeichnet, dass** sie in Form einer monolithischen, laminierten oder Mehrfachverglasung, im Besonderen einer Doppel- oder Dreifachverglasung, vorliegt.

**Claims**

1. A material comprising a transparent substrate made of glass or of a polymeric organic substance coated with a stack of thin layers comprising at least one silver-based functional metallic layer and at least two dielectric coatings, each dielectric coating including at least one dielectric layer, so that each functional metallic layer is disposed between two dielectric coatings,
**characterized in that** the stack comprises:

**EP 3 880 622 B1**

- at least one blocking layer, in particular a blocking overlayer and/or underlayer, located directly in contact with a silver-based functional metallic layer, chosen from metallic layers based on nickel comprising at least 20 % by weight of nickel relative to the weight of the nickel-based metallic layer,
- at least one zinc-based metallic layer, located above or below this silver-based functional metallic layer, directly in contact or separated by one or more layers having a total thickness of less than or equal to 20 nm.

2. The material as claimed in claim 1, **characterized in that** the blocking layer or layers has/have a thickness of between 0.1 and 5.0 nm.

3. The material as claimed in any one of the preceding claims, **characterized in that** the zinc-based metallic layer is separated from the silver-based functional metallic layer by at least one blocking layer.

4. The material as claimed in any one of the preceding claims, **characterized in that** the thickness of all the layers separating the silver-based functional metallic layer from the zinc-based metallic layer is less than or equal to 10 nm.

5. The material as claimed in any one of the preceding claims, **characterized in that** the zinc-based metallic layer is located above the silver-based functional metallic layer.

6. The material as claimed in any one of the preceding claims, **characterized in that** the stack comprises a blocking overlayer located directly in contact with the silver-based functional metallic layer.

7. The material as claimed in any one of the preceding claims, **characterized in that** the thickness of the zinc-based metallic layer is from 0.2 to 10 nm.

8. The material as claimed in any one of the preceding claims, **characterized in that** the zinc-based metallic layers comprise at least 20% by weight of zinc relative to the weight of the zinc-based metallic layer.

9. The material as claimed in any one of the preceding claims, **characterized in that** the dielectric coating located directly below the silver-based functional metallic layer includes at least one crystallized dielectric layer, in particular based on zinc oxide, optionally doped using at least one other element, such as aluminum.

10. The material as claimed in any one of the preceding claims, **characterized in that** each dielectric coating includes at least one dielectric layer which has a barrier function and is based on an aluminum and/or silicon and/or zirconium nitride.

11. The material as claimed in any one of claims 1 to 10, **characterized in that** the stack has not undergone a heat treatment at a temperature of greater than 500°C, preferably 300°C.

12. The material as claimed in any one of the preceding claims, **characterized in that** the stack has undergone a heat treatment at a temperature of greater than 300°C, preferably 500°C.

13. The material as claimed in any one of the preceding claims, **characterized in that** the substrate is made of soda-lime-silica glass.

14. A glazing comprising a material as claimed in any one of claims 1 to 13, **characterized in that** it is in the form of monolithic, laminated or multiple glazing, in particular double glazing or triple glazing.

19

# Figure 1

# Figure 2

# Figure 3

# Figure 4

**EP 3 880 622 B1**

## RÉFÉRENCES CITÉES DANS LA DESCRIPTION

**Documents brevets cités dans la description**

- WO 2007042687 A
- WO 2007042688 A
- WO 2008096089 A